# EUROPÄISCHE PATENTSCHRIFT

(11) **EP 1 386 792 B1**
(45) Veröffentlichungstag und Bekanntmachung des Hinweises auf die Patenterteilung: **03.12.2008**
(21) Anmeldenummer: 03090225.8
(22) Anmeldetag: 18.07.2003
(51) Int. Cl.: B60R 21/16

(54) **Insassen-Schutzvorrichtung für Kraftfahrzeuge**
Occupant protection device for a vehicle
Dispositif de protection d'un passager dans un véhicule

(30) Priorität: 02.08.2002 DE 10236374; 15.08.2002 DE 10237697
(43) Veröffentlichungstag der Anmeldung: 04.02.2004
(73) Patentinhaber: TAKATA CORPORATION, Minato-ku, Tokyo 106-8510 (JP)
(72) Erfinder: Bossecker, Maximilian, 76532 Baden-Baden (DE); Karlbauer, Ulrich, 89077 Ulm (DE); Getz, Robert, 89077 Ulm (DE); Heudorfer, Benedikt, 89278 Nersingen (DE)
(74) Vertreter: Gross, Felix

(56) Entgegenhaltungen:
- DE-A- 10 021 577
- DE-A- 10 152 139
- DE-A- 19 654 490
- US-B1- 6 347 807
- US-B1- 6 431 588

## Beschreibung

Die Erfindung betrifft eine Insassen-Schutzvorrichtung für Kraftfahrzeuge gemäß dem Oberbegriff des Anspruchs 1.

Die Seitenfenster eines Fahrzeuges bieten bei einem Fahrzeugüberschlag ein gefährliches Potential für der Herausschleudern des Insassen oder einzelner Körperteile des Insassen aus dem Fahrzeug. Aus der US 6 312 009 B1 ist ein Kopfairbagsystem bekannt, bei dem ein Gassack entlang seiner unteren Kante verkürzt und dadurch zwischen zwei Befestigungspunkten gespannt wird, so dass die Gefahr eines Herausschleudern verringert ist.

Aus der DE 100 21 577 A1 und der DE 199 26 269 A1 sind Schutzvorrichtungen für den Kopf- und Schulterbereich von Fahrzeuginsassen bekannt, bei denen über ein flexibles Band oder eine Straffleine eine Straffung eines entfalteten Gassackes insbesondere entlang seiner Unterkante bewirkt wird. Ein ähnlicher Stand der Technik ist auch in den Druckschriften DE 101 29 581 A1, DE 199 22 994 A1 und DE 196 54 490 A1 beschrieben.

Die im Stand der Technik bekannten Konzepte zielen darauf ab, einen Gassack nach seiner Entfaltung unter Zug zu bringen oder zumindest zu fixieren. Da ein Gassack aufgrund seiner Kammern ein elastisches Verhalten aufweist, müssen die bekannte Abspannsysteme nachteilig eine hohe Vorspannung realisieren, um das elastische Verhalten des Gassackes zu kompensieren. Insbesondere ist zu verhindern, dass der Gassack sich im Bereich eines Fensters nach außen drücken lässt. Für diesen Fall besteht die Gefahr, dass ein Fahrzeuginsasse aus dem Fahrzeug herausgeschleudert wird.

Es besteht somit ein Bedarf an zuverlässigen, einfachen Lösungen, einen Gassack oder allgemein ein Schutzelement im Fahrzeug so anzubringen, dass es einen Fahrzeuginsassen sicher daran hindert, aus dem Fahrzeug geschleudert zu werden.

Der vorliegenden Erfindung liegt dementsprechend die Aufgabe zugrunde, eine Insassen-Schutzvorrichtung für Kraftfahrzeuge zur Verfügung zu stellen, die bei einfachem und kostengünstigem Aufbau ein Herausschleudern eines Fahrzeuginsassen oder von Körperteilen eines Fahrzeuginsassen aus dem Fahrzeug sicher verhindert.

Diese Aufgabe wird erfindungsgemäß durch eine Insassen-Schutzvorrichtung mit den Merkmalen des Anspruchs 1 gelöst. Bevorzugte und vorteilhafte Ausgestaltungen der Erfindung sind in den Unteransprüchen angegeben.

Danach zeichnet sich die erfindungsgemäße Schutzvorrichtung durch mindestens ein Spannband aus, das bei einem Entfalten des Schutzelementes zwischen einem ersten Fahrzeugpunkt und einem zweiten Fahrzeugpunkt gespannt wird und dabei ein Hindernis bildet, gegen das sich das entfaltete Schutzelement mit seiner nach außen gerichteten Rückseite abstützt. Das Spannband liegt dementsprechend zwischen dem Schutzelement und der Fahrzeugstruktur bzw. zwischen dem Schutzelement und einem Fensterbereich der Fahrzeugstruktur.

Die erfindungsgemäße Lösung beruht auf der Überlegung, ein Hindernis bzw. eine Barriere für das Schutzelement bereitzustellen, gegen die sich das Schutzelement bei Vorliegen einer nach außen gerichteten Kraft abstützen kann. Die Bereitstellung einer Barriere ist dabei grundsätzlich unabhängig von der Art und Weise der Entfaltung des Gassacks, weswegen die erfindungsgemäße Lösung grundsätzlich für beliebige Schutzelemente und Gassackausgestaltungen eingesetzt werden kann. Wichtig ist, dass das Spannband anders als herkömmliche Systeme keine Zugkraft auf das Schutzelement ausübt. Seine Wirkung liegt allein in der Bereitstellung einer Abstützung für das Schutzelement.

Die erfindungsgemäße Lösung zeichnet sich durch wenige, einfache Bauteile, nämlich ein Spannband sowie Mittel zu dessen Befestigung und Führung aus. Sie ist daher kostengünstig realisierbar sowie einfach und platzsparend in der Montage. Harte, bewegliche Bauteile werden vermieden. Wegen der Funktionalität des Spannbandes unabhängig vom Schutzelement können als Schutzelemente Gassäcke mit einem flexiblen und einfachen Design verwendet werden.

Der erste und der zweite Fahrzeugpunkt, zwischen denen das Spannband gespannt wird, sind insbesondere ein vorderer und ein hinterer Fahrzeugpunkt. Es wird dann eine Seitenaufprall-Schutzvorrichtung bereitgestellt. Grundsätzlich kann das Spannband jedoch auch zwischen anderen Fahrzeugpunkten gespannt sein, etwa im vorderen oder hinteren Bereich des Fahrzeugs, etwa um ein im Bereich der Frontscheibe oder der Heckscheibe sich entfaltendendes Schutzelement abzustützen.

Bei einem vorderen Fahrzeugpunkt und einem hinteren Fahrzeugpunkt, zwischen denen das Spannband gespannt wird, handelt es sich bevorzugt um eine vordere und eine hintere Säule. Das Spannelement kann beispielsweise zwischen der A-Säule und der B-Säule, zwischen der B-Säule und der C-Säule oder zwischen der A-Säule und der C-Säule eines Fahrzeugs gespannt sein.

In einer bevorzugten Ausgestaltung der Erfindung ist vorgesehen, dass das Spannband keine oder eine nur geringe Elastizität aufweist. Eine solche ist gerade nicht erwünscht, da das durch das Spannband bereitgestellte Hindernis sonst nachgiebig wäre.

Das Spannband ist bevorzugt über Führungselemente, die auf der nach außen gerichteten Rückseite des Schutzelementes angeordnet sind, längsverschiebbar mit dem Schutzelement verbunden. Die Führungselemente sind beispielsweise an dem Schutzelement befestigte Schlaufen, durch die das Spannband verläuft. Hierbei wird darauf hingewiesen, dass durch die Verbindung des Spannbandes mit dem Schutzelement keine Zugkraft auf das Schutzelement ausgeübt wird. Dies wäre nur möglich, wenn das Spannband in Längsrichtung fest mit dem Schutzelement verbunden wäre. Die Verbindung mit dem Schutzelement dient allein einem Halten des Schutzelements an dem Spannband. Dies ist insbesondere von Vorteil, wenn ein als Gasack ausgebildetes Schutzelement beschädigt wird. Trotz der Beschädigung des Gassacks, die zu dessen Erschlaffen führt, wird dieser an dem gespannten Spannband gehalten, so dass die Fensteröffnung sicher verschlossen bleibt.

In einer alternativen Ausgestaltung verläuft das Spannband zwischen der Rückseite des Schutzelements und einer mit dem Schutzelement verbundenen Gewebelage. Ein Halten des Schutzelements am Spannband wird dementsprechend nicht durch gesonderte Führungselemente, sondern durch eine zusätzliche Gewebelage bereitgestellt, wobei das Spannband zwischen der der nach außen gerichteten Rückseite des Schutzelements und der Gewebelage verläuft. Dabei kann sich dass Spannband im wesentlichen frei gegenüber dem Schutzelement bewegen. Eine Zugkraft auf das Schutzelement wird nicht ausgeübt. Die Gewebelage bildet mit der Rückseite des Schutzelements eine Art Tasche für das Spannband, die auch die Form eines Gewebeschlauches annehmen kann entsprechend dem vom Spannband bei Spannen benötigten Raum. Dadurch, dass dass Spannband durch eine Gewebelage abgedeckt ist, wird die Gefahr von Verletzungen des Insassen minimiert.

In einer bevorzugten Ausbildung der Erfindung ist vorgesehen, dass das Spannen des Spannbandes durch die Entfaltung des Schutzelements herbeigeführt wird, wobei das Spannband an mindestens einem Punkt mit dem Schutzelement verbunden ist. Das Schutzelement selbst initialisiert und bewirkt somit des Spannen des Schutzelementes. Auf diese Weise kann auf zusätzliche Auslösevorrichtungen zum Spannen des Spannbandes verzichtet werden, so dass eine besonders einfache und kostengünstige Lösung vorliegt. Allerdings liegt es grundsätzlich ebenfalls im Rahmen der Erfindung, das Spannen des Spannbandes von der Entfaltung des Schutzelements vollständig zu entkoppeln. Hierbei sind beispielsweise gesonderte Auslösevorrichtungen vorgesehen, die vergleichbar einem Gasgenerator zu gegebener Zeit ein Spannen des Spannbandes bewirken. Das Spannen des Spannbandes kann dabei zusammen oder leicht zeitversetzt mit dem Entfalten des Schutzelements erfolgen.

Zum Spannen des Spannband erstreckt sich das Spannband bevorzugt von einem ersten Befestigungspunkt über mindestens eine Umlenkvorrichtung zu einem zweiten Befestigungspunkt. Die Befestigungspunkte können dabei karosseriefest oder auch beweglich sein. Die genaue Bandführung kann auf vielfältige Weise erfolgen.

In einer ersten Variante ist das Spannband von einem ersten Befestigungspunkt im Bereich der einen Fahrzeugsäule über eine erste Umlenkvorrichtung im Bereich der anderen Fahrzeugsäule und eine zweite Umlemkvorrichtung im Bereich des Dachrahmens mit einem unteren Bereich des Schutzelements verbunden. Bei einem Entfalten des Schutzelements wird das Spannelement dabei zwischen dem ersten Befestigungspunkt und der ersten Umlenkvorrichtung gespannt.

In einer zweiten Variante ist das Spannband von einem ersten Befestigungspunkt im Bereich der einen Fahrzeugsäule über eine erste Umlenkvorrichtung im Bereich der anderen Fahrzeugsäule, eine zweite Umlenkvorrichtung im Bereich des Dachrahmens und eine dritte, im Schutzelements vorgesehene Umlenkung mit einem Befestigungspunkt im Bereich des Dachrahmens verbunden. Auch hier erfolgt ein Spannen des Spannelements zwischen dem ersten Befestigungspunkt und der ersten Umlenkvorrichtung.

In einer dritten Variante verläuft das Spannband zwischen einem ersten ortsfesten Befestigungspunkt im Bereich der einen Fahrzeugsäule und einer im Wesentlichen vertikal verlaufenden Führung im Bereich der anderen Fahrzeugsäule, wobei das Spannband mit Entfalten des Gassackes entlang der vertikalen Führung nach unten bewegt wird.

In einer vierten Variante verläuft das Spannband zwischen einer ersten, im Wesentlichen vertikal verlaufenden Führung im Bereich der vorderen Fahrzeugsäule und einer zweiten, im Wesentlichen vertikal verlaufenden Führung im Bereich der hinteren Fahrzeugsäule. Es liegt im nicht entfalteten Zustand des Schutzelementes im Bereich des Dachrahmens und wird nach Entfaltung des Schutzelementes in eine demgegenüber nach unten verlagerte Position zwischen den beiden Führungen verschoben. Im Vergleich zu der dritten Variante sind beide Befestigungspunkte bzw. Enden des Spannbandes verschiebbar angeordnet.

Bei der dritten und vierten Variante wird die Führung bevorzugt durch ein im Wesentlichen vertikal verlaufendes Seil gebildet, das sich zwischen zwei ortsfesten Befestigungspunkten erstreckt. Die Führung kann jedoch auch in anderer Art und Weise ausgebildet sein, beispielsweise durch eine Führungsschiene oder dergleichen.

Die Schutzvorrichtung weist bevorzugt eine Rücklaufsperre auf, die eine Freigabe bzw. ein Entspannen bzw. ein Lockern des gespannten Bandes verhindert. Hierdurch wird insbesondere bei den Ausgestaltungen der Erfindung, bei denen das Spannen des Spannbandes durch die Schutzvorrichtung herbeigeführt wird, sichergestellt, dass auch nach einem Erschlaffen des Schutzelements bzw. Gassacks das Spannband gespannt bleibt.

Die Schutzvorrichtung weist bevorzugt eine Entriegelungsvorrichtung zur manuellen Entriegelung des Spannbandes durch einen Fahrzeuginsassen auf. Dadurch wird dem Insassen nach einem Unfall ermöglicht, durch Lösen des Spannbandes ggf. durch das Fenster das Fahrzeug zu verlassen. Die Entriegelungsvorrichtung weist beispielsweise ein Schneidelement zum Durchtrennen des Spannbandes oder Mittel zum Deaktivieren einer Rücklaufsperre auf. Sofern das Spannband aus zwei durch eine Verbindungsvorrichtung miteinander verbundenen Abschnitten besteht, trennt die Entriegelungsvorrichtung bei Betätigung die Verbindung der beiden Teile. In einer weiteren Ausgestaltung ist die Entriegelungsvorrichtung ein Element einer geschweißten oder geklebten Verbindung. Weiter kann vorgesehen sein, dass die Entriegelungsvorrichtung Mittel zum Lösen eines Befestigungspunktes oder Umlenkpunktes des Spannbands aufweist. Schließlich ist auch denkbar, dass die Entriegelungsvorrichtung eine zeitgesteuerte Entriegelung des Spannbandes vornimmt. Beispielsweise wird das Spannband nach einem bestimmten Zeitraum nach dem Entfalten des Schutzelements durch ein elektrisch ausgelöstes Entriegeln der Rücklaufsperre gelöst.

Das Entfaltungselement ist in an sich bekannter Weise insbesondere ein aufblasbarer Gassack oder ein nicht aufblasbares Segel.

Bei Verwendung eines Gassacks als Schutzelement weist dieser bevorzugt mindestens eine im wesentlichen vertikal verlaufende Kammer auf, uns zwar bevorzugt zumindest in dem Bereich, in dem das Spannband mit dem Gassack verbunden ist. Hierdurch wird erreicht, dass das von oben oder unten einströmende Gas schnell die entsprechende Kammer füllt und der Verbindungspunkt des Spannbandes mit dem Gassack schnell und unter hohem Druck eine vertikale translatorische Bewegung zum Spannen des Spannbandes erfährt. Je vertikaler die entsprechende Kammer verläuft, desto besser wird die Kammer gefüllt und das Spannband gespannt, so dass die Kammer bevorzugt senkrecht oder nahe senkrecht verläuft.

Bevorzugt besitzt der Gassack mehrere parallele, vertikal verlaufende Kammern. Die einzelnen parallelen und vertikal verlaufenden Kammern erhöhen die Stabilität des entfalteten Gassacks und wirken wie Biegebalken. Der Gassack knickt bei Auftreffen auf ein horizontal verlaufendes, gespannten Spannband daher mit hoher Sicherheit nicht entlang der Berührungslinie mit dem Spannband ein.

Die Erfindung wird nachfolgend unter Bezugnahme auf die Figuren der Zeichnung anhand mehrerer Ausführungsbeispiele näher erläutert. Es zeigen:
- Fig. 1 -: ein erstes Ausführungsbeispiel einer Seitenaufprall-Schutzvorrichtung mit einem einen Gassack abstützenden Spannband;
- Fig. 2 -: die Schutzvorrichtung der Figur 1 nach Entfalten des Gassacks und Spannen des Spannbandes;
- Fig. 3 -: eine Detailansicht einer Rücklaufsperre der Schutzvorrichtung der Figur 1;
- Fig. 4 -: die Schutzvorrichtung der Figur 1 nach Entfalten des Gassackes und Spannen des Spannbandes in einer Sicht von der Außenseite des Fahrzeugs;
- Fig. 5 -: ein zweites Ausführungsbeispiel einer Schutzvorrichtung mit einem einen Gassack abstützenden Spannband;
- Fig. 6 -: die Schutzvorrichtung der Figur 5, wobei ein im wesentlichen rechteckiges Fenster gesichert wird;
- Fig. 7 -: ein drittes Ausführungsbeispiel einer Schutzvorrichtung mit einem einen Gassack abstützenden Spannband;
- Fig. 8 -: die Schutzvorrichtung der Figur 7 mit entfaltetem Gassack und gespanntem Spannband;
- Fig. 9 -: ein viertes Ausführungsbeispiel einer Schutzvorrichtung mit einem einen Gassack abstützenden Spannband;
- Fig. 10 -: die Schutzvorrichtung der Figur 9 mit entfaltetem Gassack und gespanntem Spannband;
- Fig. 11 -: ein fünftes Ausführungsbeispiel einer Schutzvorrichtung mit einem einen Gassack abstützenden Spannband;
- Fig. 12 -: die Schutzvorrichtung der Figur 11 mit entfaltetem Gassack und gespanntem Spannband;
- Fig. 13 -: ein Ausführungsbeispiel einer Seitenaufprall-Schutzvorrichtung mit einem den Gassack abstützenden Spannband, wobei die Schutzvorrichtung eine schematisch dargestellte Entriegelungsvorrichtung zum Lockern des gespannten Spannbandes aufweist;
- Fig. 14-: ein erstes Ausführungsbeispiel einer Entriegelungsvorrichtung, wobei die Entriegelungsvorrichtung ein Schneidelement zum Durchtrennen des Spannbandes aufweist;
- Fig. 15-: ein zweites Ausführungsbeispiel einer Entriegelungsvorrichtung, wobei die Entriegelungsvorrichtung einen Druckknopf mit einem integrierten Schneidelement aufweist;
- Fig. 16-: ein drittes Ausführungsbeispiel einer Entriegelungsvorrichtung, wobei die Entriegelungsvorrichtung ein sich verjüngendes Schneidelement ausbildet;
- Fig. 17-: ein viertes Ausführungsbeispiel einer Entriegelungsvorrichtung, wobei die Entriegelungsvorrichtung eine Sicherungshülse umfasst, die zwei miteinander verbundene Enden des Spannbandes sichert;
- Fig. 18 -: ein fünftes Ausführungsbeispiel einer Entriegelungsvorrichtung, wobei die Entriegelungsvorrichtung einen Sicherungsstift zum Lösen zweier miteinander verbundener Teile des Spannbandes umfasst;
- Fig. 19-: ein sechstes Ausführungsbeispiel einer Entriegelungsvorrichtung, wobei die Entriegelungsvorrichtung einen Sicherungsstift zum Lösen eines Befestigungs- oder Umlenkpunktes des Spannbandes an der Fahrzeugkarosserie aufweist
- Fig. 20-: ein siebtes Ausführungsbeispiel einer Entriegelungsvorrichtung, wobei die Entriegelungsvorrichtung Mittel zum Herausdrehen eines Befestigungsbolzens aus einem Gewinde aufweist;
- Fig. 21 -: ein achtes Ausführungsbeispiel einer Entriegelungsvorrichtung, wobei die Entriegelungsvorrichtung Mittel zum Lösen der Verbindung zweier miteinander verbundener Kunststoffteile aufweist, die zwei Abschnitte des Spannbandes untereinander verbinden;
- Fig. 22 -: ein neuntes Ausführungsbeispiel einer Entriegelungsvorrichtung, wobei die Entriegelungsvorrichtung eine Entriegelungslasche zum Auftrennen eines zwei Enden des Spannbandes verbindenden Verbindungsteils aufweist und
- Fig. 23 -: ein zehntes Ausführungsbeispiel einer Entriegelungsvorrichtung, wobei die Entriegelungsvorrichtung eine Lasche zum Lösen einer verschweißten Verbindung oder Klettverbindung umfasst.

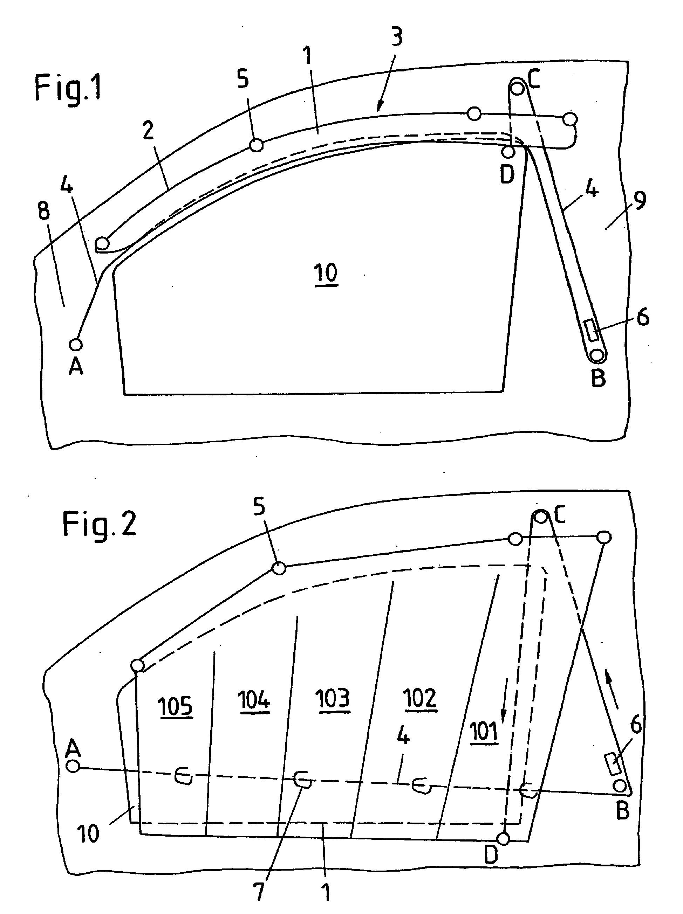

Die Figur 1 zeigt die vordere rechte Seitenscheibe 10 eines Kraftfahrzeuges, die zwischen der A-Säule 8 und der B-Säule 9 des Fahrzeugs ausgebildet ist. Ein gefalteter Gassack 1 befindet sich in einer üblichen Gassackverkleidung 2 und erstreckt sich entlang des Dachrahmens 3 zwischen der A-Säule und der B-Säule des Fahrzeugs. Der Gassack 1 ist über Befestigungslaschen 5 am Dachrahmen 3 befestigt. Des weiteren ist ein Spannband 4 vorgesehen, dessen vorderes Ende an einem Befestigungspunkt A fest mit der Fahrzeugkarosserie im Bereich der A-Säule 8 verbunden ist. Das Spannband 4 verläuft in dem dargestellten, nicht aktivierten Zustand zunächst entlang des Dachrahmens 11, wird dann nach unten gelenkt, an einem unteren, im Bereich der B-Säule angeordneten unteren Umlenkpunkt B umgelenkt. Es verläuft anschließend zu einem oberen, im Bereich des Dachrahmens 11 angeordneten weiteren Umlenkpunkt C und ist schließlich mit seinem anderen Ende an einem Punkt D mit dem Gassack 1 verbunden. Das Spannband 4 wird dabei ebenso wie der Gassack von einer üblichen Verkleidung (nicht dargestellt) abgedeckt und ist im nicht aktivierten Zustand des Gassackes für den Fahrzeuginsassen nicht zu erkennen.

Die Umlenkpunkte B, C werden durch karosseriefeste Umlenkvorrichtungen gebildet, die jeweils eine Umlenkrolle aufweisen.

Weitere Elemente eines Airbagsystems wie ein Gasgenerator und eine Gaslanze sind ebenfalls vorhanden, zur besseren Übersichtlichkeit jedoch nicht dargestellt. Es handelt sich hierbei um übliche Elemente eines Airbagsystems, die dem Fachmann bekannt sind.

Die Figur 2 zeigt die Schutzvorrichtung der Figur 1 im aktivierten Zustand, bei entfaltetem Gassack 1. Wenn sich der Gassack 1 aufgrund einer Aktivierung des zugeordneten Gasgenerators entfaltet, so bewegt sich der Verbindungspunkt D zwischen dem Spannband 4 und dem Gassack 1 im Wesentlichen vertikal nach unten. Das Spannband wird dabei zwischen dem Befestigungspunkt A an der A-Säule 8 und dem Umlenkpunkt B an der B-Säule 10 gespannt. Eine im Bereich des unteren Umlenkpunktes B ausgebildete Rücklaufsperre 6 sorgt dafür, dass das Spannband 4 auch nach einem möglichen Erschlaffen des Gassackes gespannt bleibt.

Das Band 4 liegt nun zwischen der nach außen gerichteten Rückseite des entfalteten Gassackes und dem Fahrzeugfenster. Da das Band aus einem Material besteht, das keine oder nur eine geringe Elastizität aufweist, bildet es eine nahezu unelastische, verriegelte Barriere, gegen die sich der entfaltete Gassack 1 mit seiner Rückseite abstützen kann. Wie anhand der Figur 2 dargestellt ist, wird das Spannband 4 dabei in durch Schlaufen gebildete Führungen 7 an der nach außen gerichteten Rückseite des Gassackes gehalten. Das Spannband 4 ist jedoch lose in den Schlaufen 7 bewegbar, insbesondere längsbewegbar, so dass über das Spannband 4 und die Schlaufen 7 keine Zugkraft auf den Gassack 1 ausgeübt wird.

Vielmehr stellt das gespannte Spannband 4 lediglich eine Abstützung für den Gassack 1 bereit, die diesen daran hindert, bei einer nach außen auf den Gassack 1 wirkenden Kraft sich elastisch nach außen zu verformen oder sogar ganz aus dem Fenster herausgedrückt zu werden. Das Spannband 4 stellt ein Hindernis bzw. ein Blockadeelement für den Gassack 1 dar. Zwar wird es durch den sich entfaltenden Gassack 1 gespannt. Seine Funktionalität ist jedoch unabhängig von dem Gassack, insbesondere übt es keine Zugkräfte auf den Gassack aus, um diesen zu spannen. Seine Funktion ist allein passiv in dem Sinne, dass es an der Entfaltung des Gassackes keinen Anteil hat und den entfalteten Gassack lediglich in einer bestimmten Richtung blockiert.

Dabei wird darauf hingewiesen, dass die Verbindung des Spannbandes 4 mit dem Gassack 1 über die auf der nach außen gerichteten Rückseite des Gassackes vorgesehenen Schlaufen 7 zwar sinnvoll, jedoch nicht unbedingt notwendig ist. Die Schlaufen 7 bewirken insbesondere, dass die Fensteröffnung auch bei einem beschädigten, leeren Gassack verschlossen bleibt, da der Gassack an dem gespannten Band 4 befestigt ist. Ein effektiver Schutz gegen ein Herausschleudern des Insassen oder von Körperteilen des Insassen aus dem Fahrzeug wird damit auch bei einem beschädigten Gassack bereitgestellt.
Das Einfädeln des Spannbandes 4 in die Schlaufen 6 des Gassackes erfolgt beispielsweise nach einem Falten des Gassackes und vor Anordnung des Gassackes in einer Gassackverkleidung.

Statt über Schlaufen kann das Spannband 4 auch über eine Gewebelage (nicht dargestellt) am Gassack gehalten werden. Dabei verläuft das Spannband zwischen der der nach außen gerichteten Rückseite des Gassacks und der Gewebelage, befindet sich also in einer Art Tasche.

Bei dem Spannband handelt es sich wie in Figur 1 dargestellt beispielsweise um ein im Schnitt im Wesentlichen kreisförmiges Seil. Um eine breitere Anlagefläche für eine Abstützung des entfalteten Gassackes bereitzustellen, kann das Spannband jedoch auch als relativ breites Band ähnlich dem Trägerband eines Rucksackes ausgebildet sein, zumindest in solchen Teilbereichen, die bei gespanntem Spannband im Fenster angeordnet sind. Ein weiterer Vorteil einer relativ breiten Ausbildung des Spannbandes besteht darin, dass die Gefahr eines Einschneidens und einer eventuellen Beschädigung des Gassackes aufgrund der vergrößerten Auflagefläche vermindert ist.

Das Spannband weist wie bereits erwähnt eine möglichst geringe Elastizität auf, da es anders als im Stand der Technik verwendete Seile und Bänder nicht die Aufgabe hat, eine Zugspannung auf einen Gassack auszuüben, sondern ein möglichst unnachgiebiges Hindernis darstellen soll. Es sind zahlreiche Materialien denkbar, beispielsweise eine Ausbildung aus Stoff oder einem Kunststoff wie Polyamid.

Der Gassack 1 weist mehrere parallele, nahezu vertikal verlaufende Kammern 101, 102, 103, 104, 105 auf, die die Stabilität des entfalteten Gassacks 1 erhöhen. Insbesondere verhindern die Kammern aufgrung der durch sie bereitgestellten erhöhten Stabilität sicher, dass der Gassack 1 bei Auftreffen auf das horizontal gespannte Spannband 4 um seine Berührungslinie mit dem Spannband 4 einknickt. Des weiteren ist von besonderem Vorteil, dass auch der Verbindungspunkt D zwischen dem Spannband 4 und dem Gassack 1 sich im Bereich einer vertikal verlaufenden Kammer 101 befindet. Durch die vertikale Ausrichtung der Kammer 101 wird ein schnelles Befüllen der Kammer 101 mit Gas und eine schnelle und unter hohem Druck erfolgende Ausdehnung der Kammer 101 vertikal nach unten sichergestellt, so dass auch der Verbindungspunkt D schnell und unter hohem Druck vertikal nach unten bewegt wird und das Spannband 4 schnell und mit hoher Spannung gespannt wird.

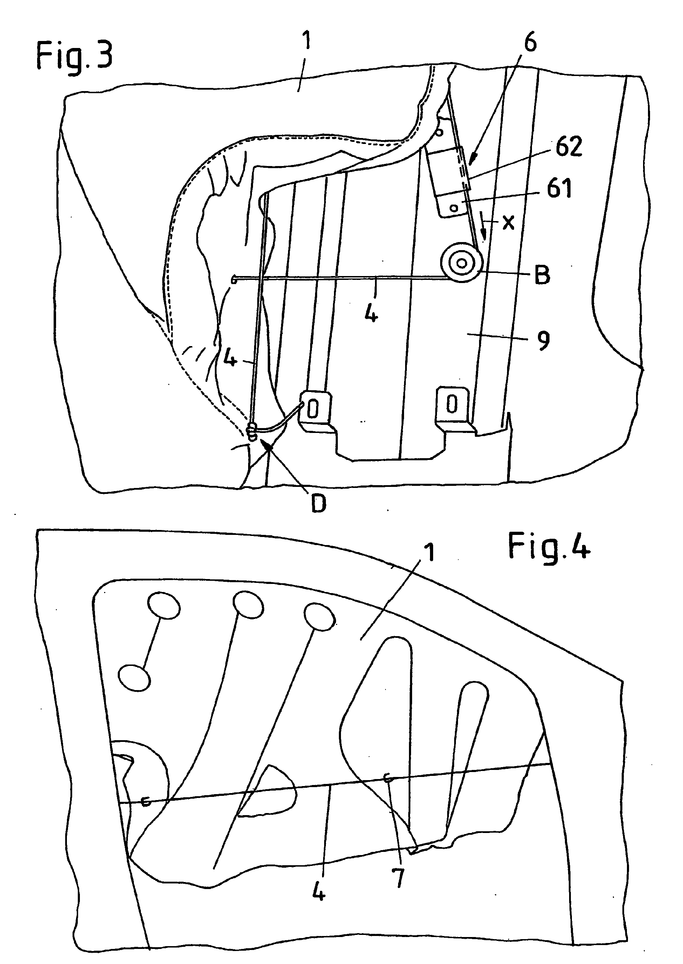

Die Figur 3 zeigt als Detaildarstellung die benachbart des unteren Umlenkpunktes B angeordnete Rücklaufsperre 6. Die Rücklaufsperre 6 ist möglichst nahe des Umlenkpunktes B angeordnet, damit die Länge des Bandes 4 zwischen dem vorderen Befestigungspunkt A und der Rücklaufsperre möglichst kurz und dementsprechend die Nachgiebigkeit des Spannbandes 4 zwischen den Punkten A und B möglichst gering ist. Die Rücklaufsperre 6 ist in einem Befestigungsbereich 61 fest mit der B-Säule 9 verbunden. Der eigentliche Sperrmechanismus 62 wird beispielsweise durch zwei verschwenkbare Teile bereitgestellt, zwischen denen das Spannband 4 verläuft und die dieses bei Auftreten einer Kraft in Richtung X zwischen sich festklemmen (nicht gesondert dargestellt). Rücklaufsperren sind dem Fachmann an sich bekannt.

In der Figur 3 ist der Verbindungspunkt D zwischen dem Spannband 4 und dem Gassack 1 gut zu erkennen. Die Verbindung erfolgt beispielsweise durch ein Verknoten des Endes des Spannbandes 4 an einer Schlaufe des Gassacks 1.

Die Figur 4 zeigt die Schutzvorrichtung mit entfaltetem Gassack 1 und gespanntem Spannband 4 bei Betrachtung von der Außenseite des Fahrzeuges (und bei geöffneter Tür). Es ist gut zu erkennen, dass das mittels Schlaufen 7 längsbeweglich an der nach außen gerichteten Rückseite des Gassackes 1 befestigte Spannband 4 ein Hindernis für den Gassack darstellt, das diesen daran hindert, aus der Fensteröffnung herausbewegt zu werden.

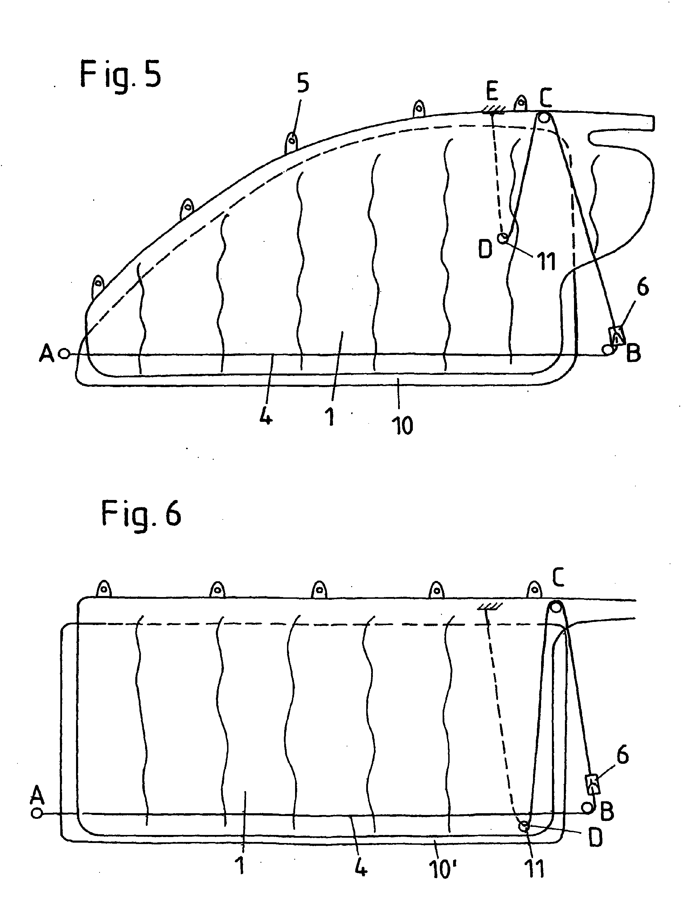

In den Figuren 5 und 6 ist ein weiteres Ausführungsbeispiel dargestellt, in dem das Spannband 4 an dem Punkt D nicht mit seinem Ende mit dem Gassack 1 verbunden ist, sondern lediglich eine erneute Umlenkung an einer Aussparung 11 des Gassacks 1 erfährt. Das Ende des Spannbandes 4 ist an einem weiteren Befestigungspunkt E im Bereich des Dachrahmens befestigt. Die Anordnung gleicht einem umgekehrten Flaschenzug. Es wird erreicht, dass das Band 4 noch stärker gestrafft wird. Hierdurch ist es möglich, die horizontal verlaufende Spannlinie zwischen den Punkte A und B tiefer zu legen. Dies weist den Vorteil auf, dass im Falle einer Beschädigung des Gassackes der gesamte Fensterbereich durch das Spannband 4 gesichert ist, jedenfalls sofern der Gassack über Schlaufen an der nach außen gerichteten Rückseite mit dem Spannband verbunden ist. Figur 6 zeigt die Schutzvorrichtung der Figur 5 bei der Sicherung eines um wesentlichen rechteckigen Fensters 10' beispielsweise zwischen der B-Säule und der C-Säule.

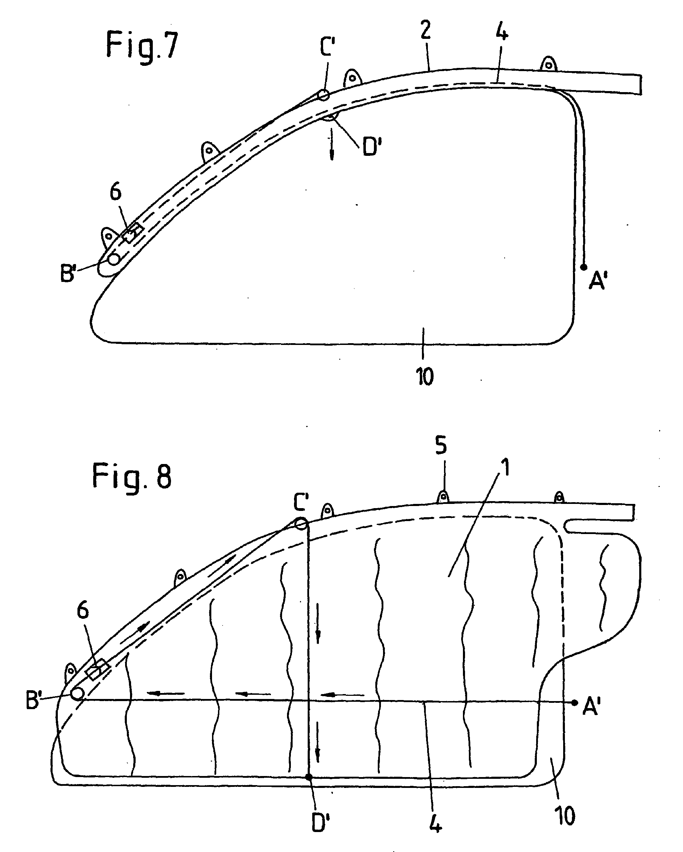

Die Ausgestaltung der Figuren 7 und 8 entspricht im Wesentlichen der Ausgestaltung der Figuren 1 bis 4, wobei eine gegenüber den Figuren 1 bis 4 spiegelverkehrte Anordnung des Spannbandes 4 vorgesehen ist. So wird das Spannband 4 von einem an der B-Säule befestigten Befestigungspunkt A' über den Dachrahmen zu einem an der A-Säule befestigten Umlenkpunkt B' von diesem weiter zu einem zweiten, im Bereich des Dachrahmens angeordneten Umlenkpunkt C' geleitet und ist es mit seinem Ende dann an Punkt D' dem Gassack 1 befestigt. Figur 8 zeigt die Schutzvorrichtung bei entfaltetem Gassack und gespanntem Band 4. Die Richtung der angreifenden Kräfte ist durch Pfeile angedeutet. Die Funktion ist identisch mit der in Bezug auf die Figuren 1 bis 4 beschriebenen Funktion.

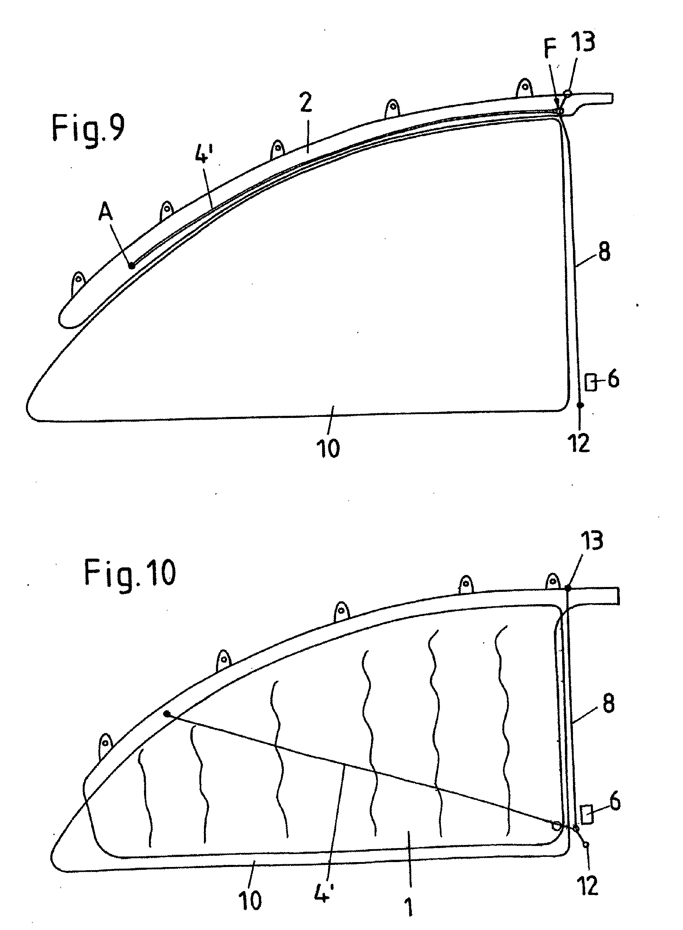

Die Figuren 9 und 10 zeigen ein weiteres Ausführungsbeispiel, dass sich durch eine besonders einfache Ausgestaltung auszeichnet. Das Spannband 4' ist hier als Band ausgebildet, das an seinem einen Ende A im Bereich der A-Säule oder auch des vorderen Dachrahmens mit der Fahrzeugkarosserie befestigt ist. Das andere Ende F des Spannbandes 4' ist mit einer im Wesentlichen vertikal verlaufenden Führung 8 im Bereich der B-Säule verbunden. Die Verbindung erfolgt über eine Schlaufe. Gleichzeitig ist das Spannband 4' am oder in der Nähe des Befestigungspunktes F beispielsweise ebenfalls über eine Schlaufe oder über eine Öse mit dem Gassack 1 verbunden. Gemäß Figur 10 wird das Spannband 4' bei einem Entfalten des Gassackes 1 durch den sich entfaltenden Gassack 1 entlang der Führung 8 nach unten bewegt. Hierbei erfolgt eine Straffung des Spannbandes 4'. Dabei ist eine schematisch dargestellte Rücklaufsperre 6 vorgesehen, die verhindert, dass das Spannband 4' sich entlang der Führung 8 wieder nach oben bewegt.

Die Rücklaufsperre kann statt an der Karosserie auch direkt an der Schlaufe F angebracht sein.

Die Führung ist in dem Ausführungsbeispiel der Figur 9 und 10 als vertikal zwischen zwei Befestigungspunkten 12, 13 verlaufendes Band ausgebildet. Grundsätzlich können jedoch auch andere Führungsvorrichtungen, beispielsweise eine Schienenführung vorgesehen sein.

Der vordere Befestigungspunkt A des Spannbandes 4' befindet sich bevorzugt etwa in halber Höhe des Fensters 10, so dass das gespannte Spannband 4' quer durch die Fensteröffnung verläuft. Das Spannband 4' ist in dieser Ausführungsform nicht über Schlaufen mit dem Gassack verbunden. Da das Spannband das zu schützende Fenster schräg abdeckt, stellt es ein sicheres Hindernis für den Gassack 1 dar, der sich mit seiner außen liegenden Rückseite an dem Spannband 4' abstützt.

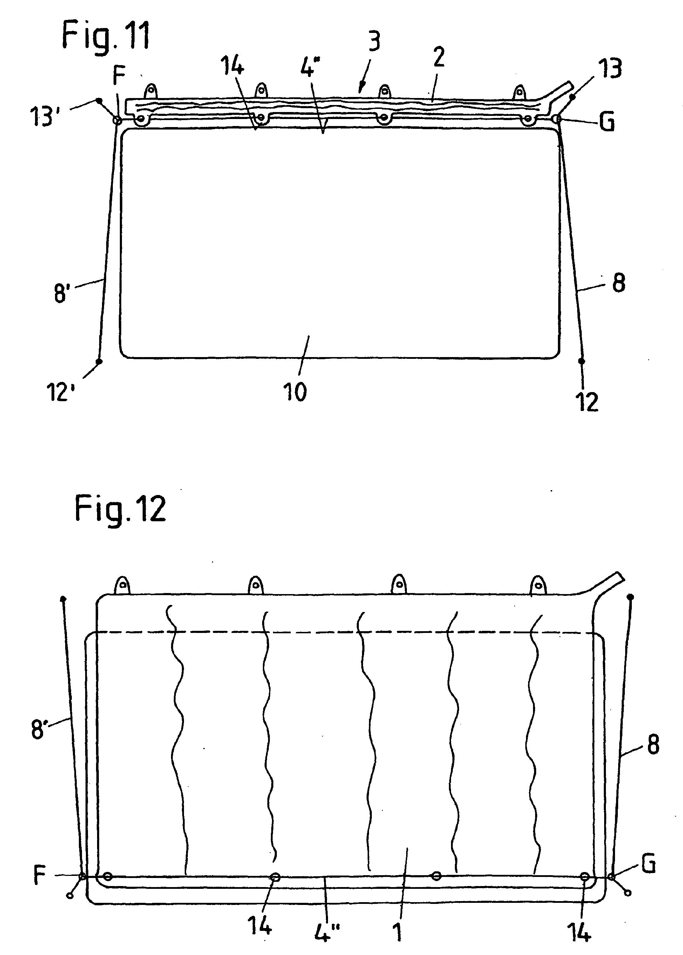

Das Ausführungsbeispiel der Figuren 11 und 12 stellt insofern eine Weiterentwicklung des Ausführungsbeispiels der Figuren 9 und 10 dar, als nunmehr beide Enden F, G des Spannbandes 4" in vertikaler Richtung entlang Führungen 8, 8' verschiebbar sind. Die vertikalen Führungen 8, 8' verlaufen beispielsweise entlang einer mittleren B-Säule und einer hinteren C-Säule. In dem dargestellten Ausführungsbeispiel sind die Führungen 8, 8' wiederum als vertikal verlaufendes Band ausgebildet, das zwischen zwei karosseriefesten Punkte 12, 13, 12', 13' gespannt ist. Grundsätzlich können die Führungen jedoch auch in anderer Art und Weise ausgebildet sein. Das Spannband 4" ist im nicht entfalteten Zustand des Gassackes im Dachrahmen 3 angeordnet. Seine beiden Endes F, G sind zum einen jeweils über Schlaufen mit einer der vertikalen Führungen 8, 8' verbunden. Des weiteren ist das Spannband über Schlaufen oder Ösen 14 an mehreren Punkten mit dem Gassack 1 verbunden.

Im Auslösefall wird das Spannband 4" durch den sich entfaltenden Gassack 1 mit seinen beweglichen Endpunkten F, G entlang der Führungen nach unten bewegt. Das Spannband 4" ist dabei über die Ösen 14 lose mit dem Gassack 1 verbunden.

In einer bevorzugten Weiterbildung dieser Ausgestaltung verlaufen die Führungen 8, 8' jeweils schräg, und zwar derart, dass der Abstand zwischen den Führungen nach unten hin leicht zunimmt. Hierdurch wird erreicht, dass das Spannelement 4" im Dachhimmel zunächst relativ lose gelagert werden kann und sich dann mit zunehmender Verschiebung nach unten zunehmend spannt.

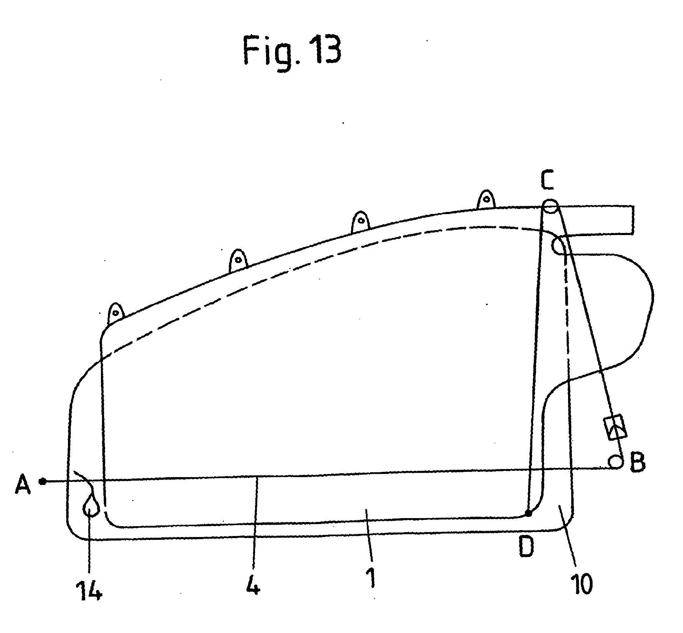

Die Figur 13 zeigt eine Schutzvorrichtung gemäß Figur 1, wobei zusätzlich eine Entriegelungsvorrichtung 14 schematisch dargestellt ist. Die Entriegelungsvorrichtung 14 ist insbesondere benachbart der Befestigungspunkte A oder B angebracht und ermöglicht es einem Insassen, das gespannte Spannband 4 zu entriegeln, um im Notfall das Fahrzeug durch die Fensteröffnung verlassen zu können.

Bevorzugt ist die Entriegelungsvorrichtung mit einem Symbol und/oder einem Schriftzug (z.B. PRESS, PULL) versehen, um auf die Möglichkeit einer Entriegelung aufmerksam zu machen. Auch ist die Entriegelungsvorrichtung so angebracht, dass sie durch den entfalteten Gassack zum Vorschein kommt. Zusätzlich ist sie am besten so lokalisiert, dass sie gleichermaßen von der Innenseite und von der Außenseite des Fahrzeugs sichtbar ist. Die Entriegelungsvorrichtung kann unterschiedlichster Ausgestaltung sein. Sie kann dabei unmittelbar das Spannband betreffen oder eine Deaktivierung der Rücklaufsperre bewirken, wobei im ersten Fall das Seil in der Regel durchtrennt und im zweiten Fall das Seil wieder freigegeben wird.

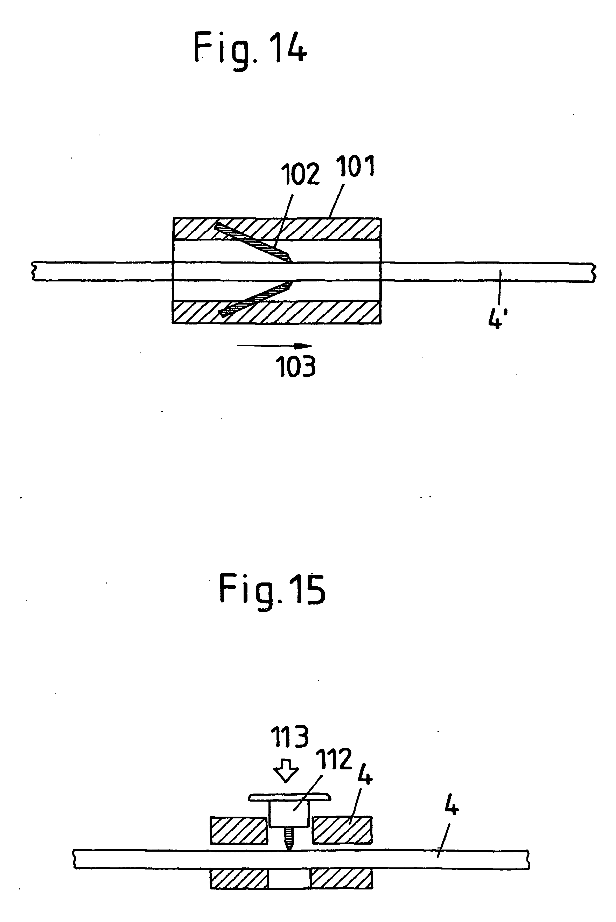

Eine erste Ausgestaltung einer solchen Entriegelungsvorrichtung ist in der Figur 14 dargestellt. Danach ist die Entriegelungsvorrichtung als Schlitten 101 mit zwei integrierten Schneidelementen 102 ausgebildet. Durch ein Verschieben des Schlittens 101 in der Auslöserichtung 103 wird das Band 4 durch die Schneidelemente 102 durchtrennt.

Bei der Ausgestaltung der Figur 15 weist die Entriegelungsvorrichtung ein an dem Spannband 4 befestigtes Halteelement 111 mit einem Druckknopf 112 mit integriertem Schneidelement auf, wobei bei Betätigen des Druckknopfes 112 in Auslöserichtung 113 das Spannband 4 wiederum durchtrennt wird.

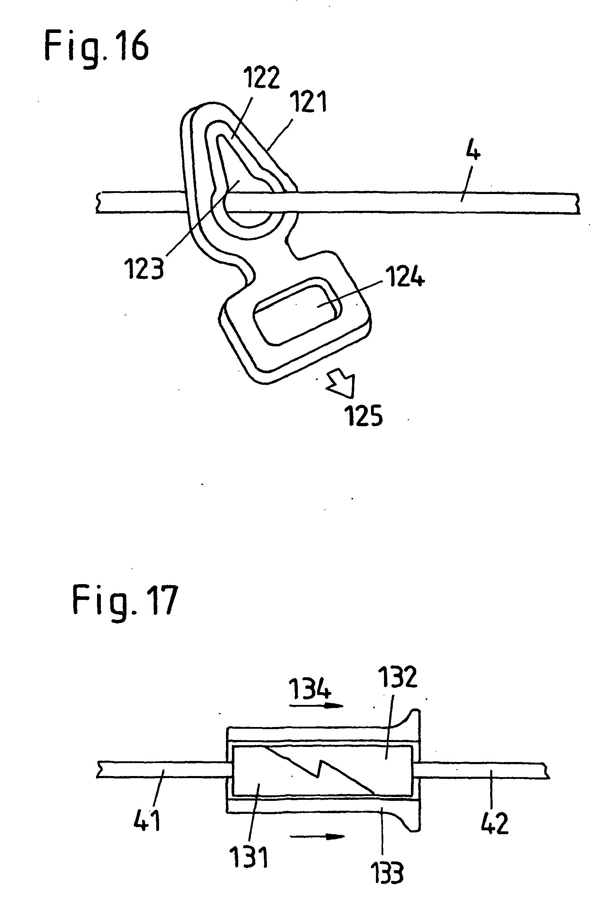

Gemäß Figur 16 ist zur Durchtrennung des Spannbandes ein Schneidelement 121 vorgesehen, das eine erste, mit einer Schneide 122 versehende Aussparung 123 und eine zweite, einer erleichterten Greifbarkeit dienende Aussparung 124 ausgebildet. Die mit der Schneide 122 versehende Aussparung 123 weist einen sich verengenden Bereich auf, so dass das Spannband 4 bei Ziehen in Auslöserichtung 125 durch das Schneidelement 122 durchtrennt wird.

Die Figur 17 zeigt ein Ausführungsbeispiel, bei dem das Spannband miteinander verbundene Abschnitte 41, 42 aufweist. Jeder Abschnitt ist mit einem Formschlusselement 131, 132 verbunden, die durch eine Sicherungshülse 133 gesichert sind. Durch ein Verschieben der Sicherungshülse 133 in Auslöserichtung 134 können die beiden Formschlusselemente 131, 132 und damit auch die beiden Abschnitte 41, 42 getrennt werden.

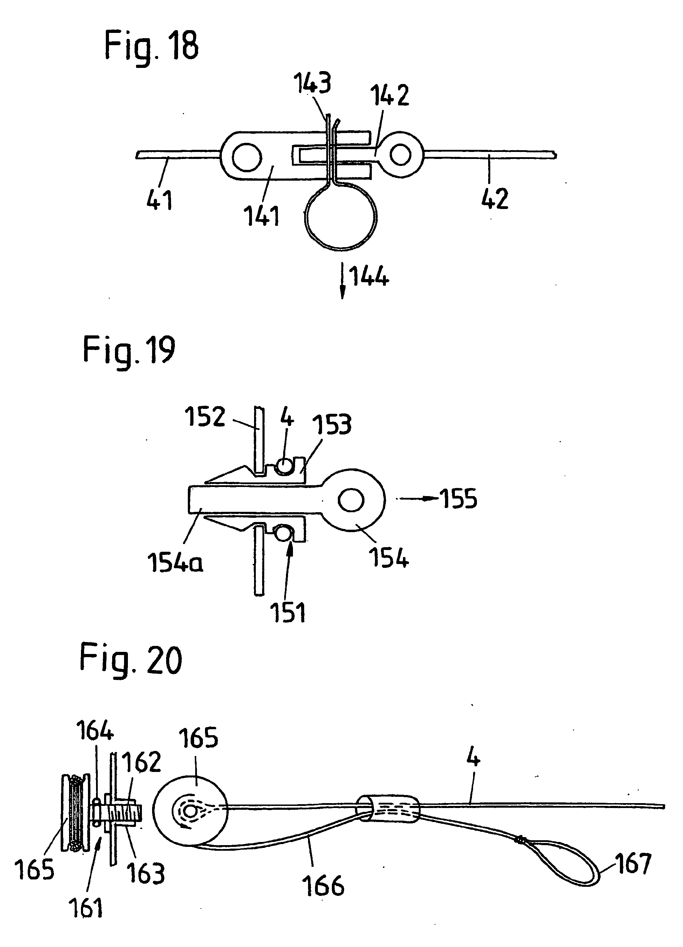

In dem Ausführungsbeispiel der Figur 18 sind wiederum zwei Abschnitte 41, 42 vorgesehen, die jeweils mit ineinandergreifenden Strukturen 141, 142 verbunden sind, die durch einen Sicherungsstift 143 zusammengehalten werden. Durch Entfernen des Sicherungsstiftes 143 in Auslöserichtung 144 werden die beiden Abschnitte 41, 42 voneinander getrennt.

Bei dem in Figur 19 dargestellten Ausführungsbeispiel einer Entriegelungsvorrichtung erfolgt eine Entriegelung des gespannten Bandes 4, indem ein Umlenkpunkt bzw. Befestigungspunkt des Bandes 4 gelöst wird. Der Umlenkpunkt wird durch eine Nut 151 in einem in der Fahrzeugkarosserie 152 befestigten Dorn 153 gebildet. Der Dorn 153 ist durch einen mittig durch den Dorn 153 hindurchtretenden Sicherungsstift 154 mit einem zylindrischen Bereich 154a gesichert. Bei Herausziehen des Sicherungsstiftes 154 in Auslöserichtung 155 können die in der Fahrzeugkarosserie steckenden Enden des Dorns 153 aus der entsprechenden Öffnung in der Fahrzeugkarosserie herausgezogen werden, so dass der Befestigungspunkt bzw. der Umlenkpunkt gelöst wird.

Die in Figur 20 dargestellte Entriegelungsvorrichtung sieht ebenfalls ein Lösen eines Befestigungs- oder Umlenkpunktes des Spannbandes 4 vor. Der Befestigungspunkt 161 weist einen Gewindebolzen 162 auf, der in eine entsprechende Öffnung 163 der Fahrzeugkarosserie eingesetzt ist. Der aus der Öffnung 163 herausragende Bereich des Befestigungspunktes weist zum einen eine Umlenkung oder Befestigung 164 für das Spannband 4 auf. Des weiteren ist eine Rolle 165 mit einer aufgewickelten Entriegelungsschnur 166 vorgesehen. Durch Ziehen an der Schlaufe 167 der Entriegelungsschnur 166 kann der Gewindebolzen 162 aus der karosserieseitigen Öffnung 163 herausgedreht werden, so dass der Befestigungspunkt 161 gelöst ist.

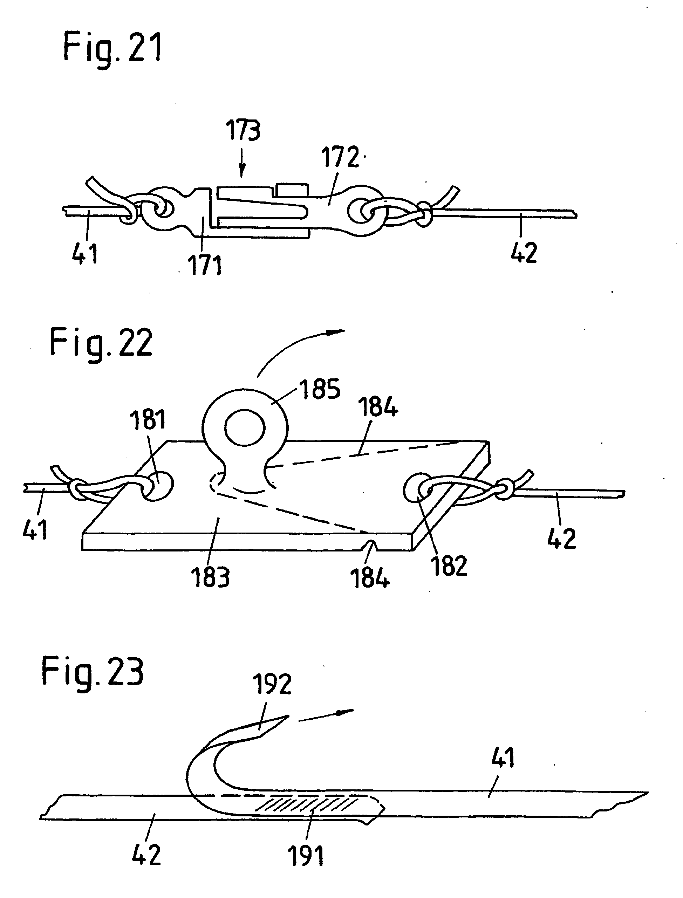

In der in Figur 21 dargestellten Ausgestaltung einer Entriegelungsvorrichtung weist das Spannband wiederum zwei Abschnitte 41, 42 auf. Die beiden Abschnitte sind jeweils mit zwei Kunststoffteilen 171, 172 verbunden, die ein herkömmliches Schnappschloss, wie es beispielsweise bei einem Rucksack verwendet wird, ausbilden. Durch Drücken auf das eine Kunststoffteil in Auslöserichtung 173 erfolgt ein Trennen der beiden Kunststorfteile und damit der beiden Abschnitte 41, 42.

Die Figur 22 zeigt eine Entriegelungsvorrichtung, die auf einem ähnlichen Prinzip wie die Öffnung einer Getränkedose beruht. Zwei Seilabschnitte 41, 42 sind mit ihren Enden mit Ösen 181, 182 eines Verbindungsteils 183 verbunden. Das Verbindungsteil weist eine Schachstelle 184 auf. Durch eine vorstehende Aufreißlasche 185 wird das Verbindungsteil 183 entlang seiner Schwachstelle 184 aufgeschält, so dass das Verbindungsteil 183 in zwei Elemente zerfällt.

Die Figur 23 schließlich zeigt ein Ausführungsbeispiel, bei dem das Spannband nicht als Seil, sondern als Band einer gewissen Breite ausgebildet ist. Das Spannband bildet wiederum zwei getrennte Abschnitte 41, 42 aus. Diese sind an ihren Enden über eine verschweißte Verbindung oder einen Klettverschluss 191 miteinander verbunden. Die geschweißte Verbindung oder der Klettverschluss ist gegenüber in Längsrichtung auftretenden Kräften hochgradig reißfest. Bei Ziehen an einer Aufreißlasche 192, wobei eine Kraft auf die verschweißte Verbindung bzw. den Klettverschluss 191 quer zur Längsrichtung ausgeübt wird, ist die vorhandene Verbindung jedoch leicht zu trennen.

Bei einer weiteren, nicht dargestellten Variante erfolgt die Verbindung zwischen zwei Abschnitten des Spannbandes mittels einer Naht, die über ein Zugelement ähnlich wie die Laufmasche eines Strumpfes aufziehbar ist.

## Patentansprüche

1. Insassen-Schutzvorrichtung für Kraftfahrzeuge, insbesondere Seitenaufprall-Schutzvorrichtung, mit mindestens einem entfaltbaren Schutzelement (1), das im entfalteten Zustand einen Vorhang zum Schutz von Fahrzeuginsassen, insbesondere im Kopf-Thorax Bereich ausbildet,
**gekennzeichnet durch**
mindestens ein Spannband (4, 4', 4"), das bei einem Entfalten des Schutzelementes (1) zwischen einem ersten Fahrzeugpunkt (A) und einem zweiten Fahrzeugpunkt (B) gespannt wird und dabei ein Hindernis bildet, gegen das sich das entfaltete Schutzelement (1) mit seiner nach außen gerichteten Rückseite abstützt.

2. Schutzvorrichtung nach Anspruch 1, **dadurch gekennzeichnet, dass** das Spannband (4, 4', 4") keine oder eine nur geringe Elastizität aufweist.

3. Schutzvorrichtung nach Anspruch 1 oder 2, **dadurch gekennzeichnet, dass** das Spannband (4) über Führungselemente (7), die auf der nach außen gerichteten Rückseite des Schutzelementes angeordnet sind, längsverschiebbar mit dem Schutzelement verbunden ist.

4. Schutzvorrichtung nach Anspruch 3, **dadurch gekennzeichnet, dass** die Führungselemente an dem Schutzelement befestigte Schlaufen (7) sind, durch die das Spannband (4) verläuft.

5. Schutzvorrichtung nach Anspruch 1 oder 2, **dadurch gekennzeichnet, dass** das Spannband (4) zwischen der Rückseite des Schutzelements (1) und einer mit dem Schutzelement verbundenen Gewebelage, insbesondere in einem Gewebeschlauch verläuft.

6. Schutzvorrichtung nach mindestens einem der vorangehenden Ansprüche, **dadurch gekennzeichnet, dass** das Spannen des Spannbandes (4) durch die Entfaltung des Schutzelements (1) herbeigeführt ist, wobei das Spannband an mindestens einem Punkt (D) mit dem Schutzelement verbunden ist.

7. Schutzvorrichtung nach Anspruch 6, **dadurch gekennzeichnet, dass** das Spannband (4) sich von einem ersten Befestigungspunkt (A) über mindestens eine Umlenkvorrichtung (B, C) zu einem zweiten Befestigungspunkt (D) erstreckt.

8. Schutzvorrichtung nach Anspruch 6 oder 7, **dadurch gekennzeichnet, dass** das Spannband (4) von einem ersten Befestigungspunkt (A) im Bereich der einen Fahrzeugsäule über eine erste Umlenkvorrichtung (B) im Bereich der anderen Fahrzeugsäule und eine zweite Umlemkvorrichtung (C) im Bereich des Dachrahmens mit einem unteren Bereich (D) des Schutzelements (1) verbunden ist.

9. Schutzvorrichtung nach Anspruch 6 oder 7, **dadurch gekennzeichnet, dass** das Spannband (4) von einem ersten Befestigungspunkt (A) im Bereich der einen Fahrzeugsäule über eine erste Umlenkvorrichtung (B) im Bereich der anderen Fahrzeugsäule, eine zweite Umlenkvorrichtung (C) im Bereich des Dachrahmens und eine dritte, im Schutzelements vorgesehene Umlenkung (D) mit einem Befestigungspunkt (E) im Bereich des Dachrahmens verbunden ist.

10. Schutzvorrichtung nach Anspruch 6, **dadurch gekennzeichnet, dass** das Spannband (4') zwischen einem ersten ortsfesten Befestigungspunkt (A) im Bereich der einen Fahrzeugsäule und einer im Wesentlichen vertikal verlaufenden Führung (8) im Bereich der anderen Fahrzeugsäule verläuft, wobei das Spannband (4') mit Entfalten des Schutzelements (1) entlang der vertikalen Führung (8) nach unten bewegt wird.

11. Schutzvorrichtung nach Anspruch 6, **dadurch gekennzeichnet, dass** das Spannband (4") zwischen einer ersten, im Wesentlichen vertikal verlaufenden Führung (8') im Bereich der vorderen Fahrzeugsäule und einer zweiten, im Wesentlichen vertikal verlaufenden Führung (8) im Bereich der hinteren Fahrzeugsäule verläuft, dabei im nicht entfalteten Zustand des Schutzelementes (1) im Bereich des Dachrahmens und nach Entfaltung des Schutzelementes (1) in einer demgegenüber nach unten verlagerten Position zwischen den beiden Führungen (8, 8') verläuft.

12. Schutzvorrichtung nach Anspruch 10 oder 11, **dadurch gekennzeichnet, dass** die Führung durch ein im Wesentlichen vertikal vorlaufendes Seil (8, 8') oder eine Führungsschiene gebildet ist.

13. Schutzvorrichtung nach mindestens einem der vorangehenden Ansprüche, **gekennzeichnet durch** eine Rücklaufsperre (6), die eine Freigabe bzw. ein Entspannen des gespannten Bandes (4, 4', 4") verhindert.

14. Schutzvorrichtung nach mindestens einem der vorangehenden Ansprüche, **dadurch gekennzeichnet, dass** das Spannband (4, 4', 4") als Seil ausgebildet ist.

15. Schutzvorrichtung nach mindestens einem der vorangehenden Ansprüche, **dadurch gekennzeichnet, dass** das Spannband (4, 4', 4") zumindest in Teilbereichen als Band einer bestimmten Breite ausgebildet ist.

16. Schutzvorrichtung nach mindestens einem der vorangehenden Ansprüche, **gekennzeichnet durch** eine Entriegelungsvorrichtung (14) zur manuellen Entriegelung des Spannbandes (4) **durch** einen Fahrzeuginsassen.

17. Schutzvorrichtung nach Anspruch 16, **dadurch gekennzeichnet, dass** die Entriegelungsvorrichtung ein Schneidelement (101) zum Durchtrennen des Spannbandes aufweist.

18. Schutzvorrichtung nach Anspruch 16, **dadurch gekennzeichnet, dass** die Entriegelungsvorrichtung Mittel zum Deaktivieren einer Rücklaufsperre aufweist.

19. Schutzvorrichtung nach Anspruch 16, **dadurch gekennzeichnet, dass** das Spannband aus zwei durch eine Verbindungsvorrichtung miteinander verbundenen Abschnitten (41, 42) besteht, wobei die Entriegelungsvorrichtung bei Betätigung die Verbindung der beiden Teile trennt.

20. Schutzvorrichtung nach Anspruch 16, **dadurch gekennzeichnet, dass** die Entriegelungsvorrichtung einen Sicherungsstift (143, 154) aufweist, durch den die Verbindungsvorrichtung gelöst wird.

21. Schutzvorrichtung nach Anspruch 16, **dadurch gekennzeichnet, dass** die Entriegelungsvorrichtung ein Element (192) einer geschweißten oder geklebten Verbindung ist.

22. Schutzvorrichtung nach Anspruch 16, **dadurch gekennzeichnet, dass** die Entriegelungsvorrichtung Mittel (154, 166) zum Lösen eines Befestigungspunktes oder Umlenkpunktes des Spannbands aufweist.

23. Schutzvorrichtung nach Anspruch 16, **dadurch gekennzeichnet, dass** die Entriegelungsvorrichtung eine zeitgesteuerte Entriegelung des Spannbandes vornimmt.

24. Schutzvorrichtung nach mindestens einem der vorangehenden Ansprüche, **dadurch gekennzeichnet, dass** das Entfaltungselement ein Gassack (1) oder ein Segel ist.

25. Schutzvorrichtung nach Anspruch 24, **dadurch gekennzeichnet, dass** der Gassack (1) mindestens eine im wesentlichen vertikal verlaufende Kammer aufweist.

26. Schutzvorrichtung nach den Ansprüchen 6 und 25, **dadurch gekennzeichnet, dass** der Gassack (1) jedenfalls in dem Bereich, in dem das Spannband (4, 4', 4") mit dem Gassack (1) verbunden ist, eine im wesentlichen vertikal verlaufende Kammer aufweist.

27. Schutzvorrichtung nach Anspruch 25 oder 26, **dadurch gekennzeichnet, dass** der Gassack (1) mehrere parallele, vertikal verlaufende Kammern aufweist.

## Claims

1. Occupant protection device for motor vehicles, in particular side-impact protection device, having at least one unfoldable protection element (1) which, when unfolded, forms a curtain for the protection of vehicle occupants, in particular in the head/chest region,
**characterized by**
at least one tensioning strap (4, 4', 4") which, when the protection element (1) is unfolded, is tensioned between a first vehicle point (A) and a second vehicle point (B) and in the process forms an obstacle against which the unfolded protection element (1) is supported by means of its outwardly directed rear side.

2. Protection device according to Claim 1, **characterized in that** the tensioning strap (4, 4', 4") has only slight elasticity, if any at all.

3. Protection device according to Claim 1 or 2, **characterized in that** the tensioning strap (4) is connected to the protection element in a longitudinally displaceable manner via guide elements (7) which are arranged on the outwardly directed rear side of the protection element.

4. Protection device according to Claim 3, **characterized in that** the guide elements are loops (7) which are fastened to the protection element and through which the tensioning strap (4) runs.

5. Protection device according to Claim 1 or 2, **characterized in that** the tensioning strap (4) runs between the rear side of the protection element (1) and a layer of fabric connected to the protection element, in particular in a tube of fabric.

6. Protection device according to one of the preceding claims, **characterized in that** the tensioning of the tensioning strap (4) is brought about by the protection element (1) unfolding, the tensioning strap being connected to the protection element at at least one point (D).

7. Protection device according to Claim 6, **characterized in that** the tensioning strap (4) extends from a first fastening point (A) via at least one deflecting device (B, C) to a second fastening point (D).

8. Protection device according to Claim 6 or 7, **characterized in that** the tensioning strap (4) is connected from a first fastening point (A) in the region of the one vehicle pillar via a first deflecting device (B) in the region of the other vehicle pillar and a second deflecting device (C) in the region of the roof frame to a lower region (D) of the protection element (1).

9. Protection device according to Claim 6 or 7, **characterized in that** the tensioning strap (4) is connected from a first fastening point (A) in the region of the one vehicle pillar via a first deflecting device (B) in the region of the other vehicle pillar, a second deflecting device (C) in the region of the roof frame and a third deflection (D) provided in the protection element to a fastening point (E) in the region of the roof frame.

10. Protection device according to Claim 6, **characterized in that** the tensioning strap (4') runs between a first, positionally fixed fastening point (A) in the region of the one vehicle pillar and an essentially vertically running guide (8) in the region of the other vehicle pillar, the tensioning strap (4') being moved downwards along the vertical guide (8) as the protection element (1) unfolds.

11. Protection device according to Claim 6, **characterized in that** the tensioning strap (4") runs between a first, essentially vertically running guide (8') in the region of the front vehicle pillar and a second, essentially vertically running guide (8) in the region of the rear vehicle pillar, and, in this case, when the protection element (1) is not unfolded, runs in the region of the roof frame and, after the protection element is unfolded, runs in a downwardly shifted position with respect to it between the two guides (8, 8').

12. Protection device according to Claim 10 or 11, **characterized in that** the guide is formed by an essentially vertically running cable (8, 8') or a guide rail.

13. Protection device according to at least one of the preceding claims, **characterized by** a return lock (6) which prevents the tensioned strap (4, 4', 4") from being released or relaxed.

14. Protection device according to at least one of the preceding claims, **characterized in that** the tensioning strap (4, 4', 4") is designed as a cable.

15. Protection device according to at least one of the preceding claims, **characterized in that** the tensioning strap (4, 4', 4") is formed at least in subregions as a strap of a certain width.

16. Protection device according to at least one of the preceding claims, **characterized by** a release device (14) for the manual release of the tensioning strap (4) by a vehicle occupant.

17. Protection device according to Claim 16, **characterized in that** the release device has a cutting element (101) for severing the tensioning strap.

18. Protection device according to Claim 16, **characterized in that** the release device has means for deactivating a return lock.

19. Protection device according to Claim 16, **characterized in that** the tensioning strap comprises two sections (41, 42) which are connected to each other by a connecting device, the release device, when actuated, separating the connection of the two parts.

20. Protection device according to Claim 16, **characterized in that** the release device has a securing pin (143, 154) by means of which the connecting device is released.

21. Protection device according to Claim 16, **characterized in that** the release device is an element (192) of a welded or bonded connection.

22. Protection device according to Claim 16, **characterized in that** the release device has means (154, 166) for releasing a fastening point or deflecting point of the tensioning strap.

23. Protection device according to Claim 16, **characterized in that** the release device undertakes a time-controlled release of the tensioning strap.

24. Protection device according to at least one of the preceding claims, **characterized in that** the unfolding element is an airbag (1) or a sail.

25. Protection device according to Claim 24, **characterized in that** the airbag (1) has at least one essentially vertically running chamber.

26. Protection device according to Claims 6 and 25, **characterized in that** the airbag (1) has an essentially vertically running chamber at least in the region in which the tensioning strap (4, 4', 4") is connected to the airbag (1).

27. Protection device according to Claim 25 or 26, **characterized in that** the airbag (1) has a plurality of parallel, vertically running chambers.

## Revendications

1. Dispositif de protection de passagers pour véhicules automobiles, en particulier dispositif de protection vis-à-vis des impacts latéraux, comprenant au moins un élément protecteur (1) déployable qui, dans l'état déployé, réalise un rideau pour la protection de passagers dans le véhicule, en particulier dans la région tête-thorax,
**caractérisé par**
au moins une bande de tensionnement (4, 4', 4") qui, lors d'un déploiement de l'élément protecteur (1), est tendue entre un premier point (A) du véhicule et un deuxième point (B) du véhicule et forme alors un obstacle contre lequel l'élément protecteur (1) déployé s'appuie par sa face postérieure tournée vers l'extérieur.

2. Dispositif de protection selon la revendication 1, **caractérisé en ce que** la bande de tensionnement (4, 4', 4") ne présente aucune élasticité, ou une élasticité seulement faible.

3. Dispositif de protection selon la revendication 1 ou 2, **caractérisé en ce que** la bande de tensionnement (4) est reliée à l'élément protecteur avec possibilité de translation longitudinale via des éléments de guidage (7) qui sont agencés sur la face postérieure, tournée vers l'extérieur, de l'élément protecteur.

4. Dispositif de protection selon la revendication 3, **caractérisé en ce que** les éléments de guidage sont des boucles (7) fixées sur l'élément protecteur, à travers lesquelles passe la bande de tensionnement (4).

5. Dispositif de protection selon la revendication 1 ou 2, **caractérisé en ce que** la bande de tensionnement (4) s'étend entre la face postérieure de l'élément protecteur (1) et une couche textile reliée à l'élément protecteur, en particulier dans un tuyau textile.

6. Dispositif de protection selon l'une au moins des revendications précédentes, **caractérisé en ce que** la mise sous tension de la bande de tensionnement (4) est provoquée par le déploiement de l'élément protecteur (1), la bande de tensionnement étant reliée à l'élément protecteur en au moins un point (D).

7. Dispositif de protection selon la revendication 6, **caractérisé en ce que** la bande de tensionnement (4) s'étend depuis un premier point de fixation (A) via au moins un dispositif de renvoi (B, C) jusqu'à un second point de fixation (D).

8. Dispositif de protection selon la revendication 6 ou 7, **caractérisé en ce que** la bande de tensionnement (4) est reliée à une zone inférieure (D) de l'élément protecteur (1) depuis un premier point de fixation (A) dans la région de l'un des montants du véhicule via un premier dispositif de renvoi (B) dans la région de l'autre montant du véhicule et un second dispositif de renvoi (C) dans la région du cadre de toiture.

9. Dispositif de protection selon la revendication 6 ou 7, **caractérisé en ce que** la bande de tensionnement (4) est reliée à un point de fixation (E) dans la région du cadre de toiture depuis un premier point de fixation (A) dans la région de l'un des montants du véhicule via un premier dispositif de renvoi (B) dans la région de l'autre montant du véhicule, un second dispositif de renvoi (C) dans la région du cadre de toiture, et un troisième dispositif de renvoi (D) prévu dans l'élément protecteur.

10. Dispositif de protection selon la revendication 6, **caractérisé en ce que** la bande de tensionnement (4') s'étend entre un premier point de fixation stationnaire (A) dans la région de l'un des montants du véhicule, et un guidage (8) qui s'étend essentiellement verticalement dans la région de l'autre montant du véhicule, ladite bande de tensionnement (4') étant déplacée vers le bas le long du guidage vertical (8) lors du déploiement de l'élément protecteur (1).

11. Dispositif de protection selon la revendication 6, **caractérisé en ce que** la bande de tensionnement (4") s'étend entre un premier guidage (8') qui s'étend essentiellement verticalement dans la région du montant antérieur du véhicule et un second guidage (8) qui s'étend essentiellement verticalement dans la région du montant postérieur du véhicule, et s'étend ici, dans l'état non déployé de l'élément protecteur (1), dans la région du cadre de toiture et, après déploiement de l'élément protecteur (1), dans une position déplacée vers le bas par rapport à celui-ci entre les deux guidages (8, 8').

12. Dispositif de protection selon la revendication 10 ou 11, **caractérisé en ce que** le guidage est formé par un câble (8, 8') qui s'étend essentiellement verticalement, ou par un rail de guidage.

13. Dispositif de protection selon l'une au moins des revendications précédentes, **caractérisé par** un mécanisme antiretour (6), qui empêche une libération ou une détente de la bande tendue (4, 4', 4").

14. Dispositif de protection selon l'une au moins des revendications précédentes, **caractérisé en ce que** la bande de tensionnement (4, 4', 4") est réalisée sous forme de câble.

15. Dispositif de protection selon l'une au moins des revendications précédentes, **caractérisé en ce que** la bande de tensionnement (4, 4', 4") est réalisée, au moins dans des zones partielles, comme une bande présentant une largeur déterminée.

16. Dispositif de protection selon l'une au moins des revendications précédentes, **caractérisé par** un dispositif de déverrouillage (14) pour le déverrouillage manuel de la bande de tensionnement (4) par un passager du véhicule.

17. Dispositif de protection selon la revendication 16, **caractérisé en ce que** le dispositif de verrouillage comprend un élément coupant (101) pour couper la bande de tensionnement.

18. Dispositif de protection selon la revendication 16, **caractérisé en ce que** le dispositif de déverrouillage comprend des moyens pour désactiver un mécanisme antiretour.

19. Dispositif de protection selon la revendication 16, **caractérisé en ce que** la bande de tensionnement est formée de deux tronçons (41, 42), reliés l'un à l'autre par un dispositif de liaison, le dispositif de déverrouillage séparant la jonction des deux parties lors de son actionnement.

20. Dispositif de protection selon la revendication 16, **caractérisé en ce que** le dispositif de déverrouillage comprend une tige de blocage (143, 154) au moyen de laquelle le dispositif de liaison est libéré.

21. Dispositif de protection selon la revendication 16, **caractérisé en ce que** le dispositif de verrouillage est un élément (192) d'une liaison soudée ou collée.

22. Dispositif de protection selon la revendication 16, **caractérisé en ce que** le dispositif de verrouillage comprend des moyens (154, 166) pour libérer un point de fixation ou un point de renvoi de la bande de tensionnement.

23. Dispositif de protection selon la revendication 16, **caractérisé en ce que** le dispositif de déverrouillage procède à un déverrouillage de la bande de tensionnement avec commande temporelle.

24. Dispositif de protection selon l'une au moins des revendications précédentes, **caractérisé en ce que** l'élément déployable est un sac à gaz (1) ou une voile.

25. Dispositif de protection selon la revendication 24, **caractérisé en ce que** le sac à gaz (1) comprend au moins une chambre qui s'étend essentiellement verticalement.

26. Dispositif de protection selon les revendications 6 et 25, **caractérisé en ce que** le sac à gaz (1) comprend une chambre qui s'étend essentiellement verticalement, en tout cas dans la zone dans laquelle la bande de tensionnement (4, 4', 4") est reliée au sac à gaz (1).

27. Dispositif de protection selon la revendication 25 ou 26, **caractérisé en ce que** le sac à gaz (1) comprend plusieurs chambres parallèles qui s'étendent verticalement.
